# EUROPEAN PATENT APPLICATION

(11) **EP 4 202 610 A1**
(43) Date of publication of application: **28.06.2023**
(21) Application number: 22215358.7
(22) Date of filing: 21.12.2022
(51) Int. Cl.: G06F 3/01

(54) **AFFECT-BASED RENDERING OF CONTENT DATA**

(30) Priority: 27.12.2021 US 202163266035 P; 05.01.2022 EP 22150303
(71) Applicant: Koninklijke KPN N.V., 3072 AP Rotterdam (NL); Nederlandse Organisatie voor toegepast-natuurwetenschappelijk Onderzoek TNO, 2595 DA 's-Gravenhage (NL)
(72) Inventor: Potetsianakis, Emmanouil, 2585 CM The Hague (NL); Brandt, Aschwin Steven Reinier, 2585 EJ The Hague (NL)
(74) Representative: Wuyts, Koenraad Maria

(57) **Abstract**

A method of processing content data is described comprising: receiving content data, preferably the content data representing video data, texture data for a 3D model, text or a 3D data defining a 3D model, to be processed by a rendering device, preferably an extended reality XR rendering device; receiving or determining adaptation information associated with the content data, the adaptation information including a target affect parameter value and one or more adaptation rules, an adaptation rule defining an adaptation process for adapting the content data or for adapting the processing of the content data to cause a change in the emotional state of a user of the rendering device; receiving or determining a measured affect value, wherein the measured affect value is determined based on sensor information of one or more sensors configured to measure an emotional state of a user of the rendering device, preferably the one or more sensors being part of the rendering device and/or wirelessly connected to the rendering device; and, adapting the content data to be processed by the rendering device or adapting the processing of the content data by the rendering device based on the measured affect value, the affect target parameter value and at least one of the one or more adaptation rules.

## Description

### Technical field

The invention relates to affect-based rendering of content data, and, in particular, though not exclusively, to methods and systems for rendering of content data, a rendering device and a server system for rendering of content data and a computer program product for executing such methods.

### Background

In augmented reality (AR) or mixed reality (MR), computer generated graphics may be used to augment the physical reality perceived by a viewer. For example, a head-worn rendering device, such as AR glasses, may be configured to render computer-generated graphics, e.g. in the form of 2D or 3D objects, and display them in such a way that they are overlaid, mixed, blended or in any other way visually combined with a scene the user of the rendering device is looking at. This way, the real world seen by a user may be augmented with digital content, such as informative content (e.g., navigation directions) or entertainment (e.g., game characters), etc.

Computer-generated graphics may also be rendered to augment a video-based representation of the physical reality the user is looking at. For example, the head-worn rendering device may include a forward-facing camera and may record and display the recorded video to a viewer while augmenting the video with computer-generated graphics. Also, other types of videos may be augmented with 3D graphics objects. For example, in Virtual Reality (VR), a so-called panoramic video or omnidirectional video may be augmented with one or more 3D graphics objects. These AR, MR and VR techniques together are referred to as Extended Reality (XR).

In XR applications biometric sensor information may be used to manipulate a virtual object on a screen. For example, US20160343168 describes an AR/MR system in which ambient metrics are measured via sensors, as well as biometric data, including heart rate and attention. It uses the environment measurements to configure a (virtual) context and the user measurements for a "personal" context in order to select and place a virtual character. Similarly, US20140354534 describes an AR system which uses electroencephalograms EEG measurements to select models and place them in a (virtual) AR space.

The above-referenced XR schemes are limited in the sense that they only provide virtual object selection and creation, based on biometric information and are not suitable for creating truly immersive XR streaming applications. Hence, from the above, it follows there is need in the art for improved XR streaming schemes, in particular there is a need in the art for methods and systems for XR streaming which allow the emotional state of the viewer as a guide for the consumption of content and/or allow purposely influencing or steering the emotional state of a viewer.

### Summary

As will be appreciated by one skilled in the art, aspects of the present invention may be embodied as a system, a method or a computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the person's computer, partly on the person's computer, as a stand-alone software package, partly on the person's computer and partly on a remote computer, or entirely on the remote computer or server. In the latter scenario, the remote computer may be connected to the person's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In a first aspect, embodiments relate to a method of processing content data comprising: receiving content data to be processed by a rendering device; receiving or determining adaptation information associated with the content data, the adaptation information including a target affect parameter value and one or more adaptation rules, an adaptation rule defining an adaptation process for adapting the content data or for adapting the processing of the content data to cause a change in the emotional state of a user of the rendering device; receiving or determining a measured affect value, wherein the measured affect value is determined based on sensor information of one or more sensors configured to measure an emotional state of a user of the rendering device; and, adapting the content data to be processed by the rendering device or adapting the processing of the content data by the rendering device based on the measured affect value, the affect target parameter value and at least one of the one or more adaptation rules.

In an embodiment, the content data may represent video data, e,g, video frames, texture data for a 3D model, text or a 3D data defining a 3D model, In an embodiment, the rendering device may be an extended reality XR rendering device. In an embodiment, the one or more sensors may be part of the rendering device. In another embodiment, the one or more sensors may be wirelessly connected to the rendering device.

During the rendering of content data by a rendering device, adaptation information may be received which indicates that a part of the content data may be adapted (e.g. changed or manipulated) or that the processing of the part of the content data may be adapted (e.g. adaptation of the playout of the content data). Here, the adaptation process may be based on a measured affect value of a user of the XR apparatus viewing the rendered content data. The adaptation process may further be based on a target affect parameter value, which may be used in a comparison with the measured affect value. To that end, the target affect parameter value may be used as a threshold value or a desired target value. This way, a rendering scheme is provided that enables adaptation of the rendering based on the measured affect of a user of a rendering device. Such rendering scheme will provide improved immersive experience for a user of the rendering device. Additionally, it allows the emotional state of the viewer may be used as a guide for the consumption of content and/or which allows purposely influencing or steering the emotional state of a viewer.

In an embodiment, the adaptation information may include a plurality of target affect parameter values, wherein each target affect parameter value may be associated with at least one adaptation rule and being associated with one or more content parts in the content data that can be adapted.

In an embodiment, the adaptation information may include identification information for identifying the one or more content parts in the content data that can be adapted, preferably the identification information including one or more presentation timestamps and/or one or more video segment identifiers.

In an embodiment, adapting the content data or adapting the processing of content data may include: determining a target affect parameter value and an adaptation rule associated with the content part on the basis of the adaptation information; and, comparing the measured affect value with the determined target affect parameter value and based on the comparison, adapting the data of the content part or adapting the processing of the data of the content part based on the determined adaptation rule.

In an embodiment, the adaptation information may include a plurality of current affect parameter values associated with at least one of the one or more target affect parameter values, wherein each current affect parameter value of the plurality of current affect parameter values may be associated with at least one adaptation rule of the plurality of adaptation rules.

In an embodiment, adapting the content data or adapting the processing of content data may include: comparing the measured affect parameter value with the plurality of current affect parameter values; determining an adaptation rule based on the comparison; and, adapting the content data or the processing of the content data based on an adaptation process defined by the determined adaptation rule.

In an embodiment, at least part of the one or more affect adaptation rules may define an adaptation process for adapting the content data, the adaptation process being configured to add, remove, replace or adjust at least part of the content data.

In an embodiment, at least part of the one or more affect adaptation rules may define an adaptation process for adapting the processing of the content data, the adaptation process being configured to increase, decrease or skip at least part of the processing of the content data.

In an embodiment, the measured affect may be based on: a user position, one or more electrocardiograms ECGs, one or more electroencephalograms EEGs signals, gaze and/or face detection, facial expression analysis, speech analysis, movement analysis, pose analysis.

In an embodiment, adapting the content data may include: receiving an executable script or a program; and, executing the executable script or program to adapt the content data.

In an embodiment, the method may further comprise: measuring ambient information defining an ambient context for the user of the rendering device; and, the adapting of the content data or the processing of the content data being further based on the ambient information.

In an embodiment, the rendering apparatus may be configured to process the content date for an display device, preferably the XR display device including at least one of: a Head Mounted Display HMD, augmented reality AR glasses, an augmented reality head-up display or a holographic display.

In an embodiment, the method may further comprise: determining user context information, the user context information including measuring a position and, optionally, a pose, a gaze and/or an orientation of the user; sending the user context information to the server system which is configured to select the content data based on the user context information.

In an embodiment, the content data may be received based on a streaming technique, preferably an adaptive streaming technique, more preferably an HTTP adaptive streaming technique and wherein the

In an embodiment, at least part of the processing of the content data may be performed by a client apparatus, preferably an adaptive streaming client apparatus, such as a MPEG DASH client apparatus.

In an embodiment, the method may further include: requesting content data based on a manifest file, preferably a media presentation description MPD, the manifest file defining a plurality of resource locators, wherein each resource locator is associated with a segment or chunk of content data, the manifest file further comprising at least part of the adaptation information

In an embodiment, at least part of the processing of the content data may be performed by a server application, preferably by an adaptive streaming server application, such as a MPEG DASH server application.

In a further aspect, embodiments may relate to a rendering device, comprising: a computer readable storage medium having computer readable program code embodied therewith, and a processor, preferably a microprocessor, coupled to the computer readable storage medium, wherein responsive to executing the computer readable program code, the processor is configured to perform executable operations comprising: receiving content data, preferably the content data representing video data, texture data for a 3D model, text or a 3D data defining a 3D model, to be processed by the rendering device, such as an extended reality XR rendering device; receiving or determining adaptation information associated with the content data, the adaptation information including a target affect parameter value and one or more adaptation rules, an adaptation rule defining an adaptation process for adapting the content data or for adapting the processing of the content data to cause a change in the emotional state of a user of the rendering device; receiving or determining a measured affect value, preferably a measured affect value, wherein the measured affect value is determined based on sensor information of one or more sensors configured to measure an emotional state of a user of the rendering device, preferably the one or more sensors being part of the rendering device and/or wirelessly connected to the rendering device; and, adapting the content data to be processed by the rendering device or adapting the processing of the content data by the rendering device based on the measured affect value, the affect target parameter value and at least one of the one or more adaptation rules.

In a further aspect, embodiments may relate to a server system comprising: a computer readable storage medium having computer readable program code embodied therewith, and a processor, preferably a microprocessor, coupled to the computer readable storage medium, wherein responsive to executing the computer readable program code, the processor is configured to perform executable operations comprising: receiving content data, preferably the content data representing video data, texture data for a 3D model, text or a 3D data defining a 3D model, to be processed by a rendering device, such as an extended reality XR rendering device; receiving or determining adaptation information associated with the content data, the adaptation information including a target affect parameter value and one or more adaptation rules, an adaptation rule defining an adaptation process for adapting the content data or for adapting the processing of the content data to cause a change in the emotional state of a user of the rendering device; receiving or determining a measured affect value, preferably a measured affect value, wherein the measured affect value is determined based on sensor information of one or more sensors configured to measure an emotional state of a user of the rendering device, preferably the one or more sensors being part of the rendering device and/or wirelessly connected to the rendering device; and, adapting the content data to be processed by the rendering device or adapting the processing of the content data by the rendering device based on the measured affect value, the affect target parameter value and at least one of the one or more adaptation rules.

In further embodiments, the rendering device may be configured to executable operations according to any of the method steps as described above.

In other embodiments, the server system may be configured to executable operations according to any of the method steps as described above.

The invention may also relate to a computer program product comprising software code portions configured for, when run in the memory of a computer, executing the method steps according to any of process steps described above.

The invention will be further illustrated with reference to the attached drawings, which schematically will show embodiments according to the invention. It will be understood that the invention is not in any way restricted to these specific embodiments.

### Brief description of the drawings

**Fig. 1** depicts a map of emotional states of a person as a function of two measurable parameters;
**Fig. 2** depicts a schematic of a streaming system for streaming affect-adaptable content according to an embodiment of the invention;
**Fig. 3** depicts a method of processing affect-adaptable content data by a rendering device according to an embodiment of the invention;
**Fig. 4** depicts a schematic of an extended reality streaming system for streaming affect-adaptable content according to an embodiment of the invention;
**Fig. 5** illustrates an example of a manifest file for signaling affect-adaptable content data according to an embodiment of the invention;
**Fig. 6** is a block diagram illustrating an exemplary data processing system that may be used in as described in this disclosure.

### Description of the embodiments

The embodiments relate to methods and systems for adapting content data for a rendering device or adapting the rendering of the content data by the rendering device based on a measured affect of a user of the rendering device. Here, the rendering device is an extended reality XR rendering device configured to display the rendered content data, e.g. virtual objects, in a viewport of a scene.

In an implementation the rendering device may be a see-through rendering device wherein 3D virtual objects are rendered on a transparent or semi-transparent display. When a user looks through the display to a real-world scene, virtual objects on top of the real-world scene will be visible for the user. The rendering device typically may include a tracking camera and sensors for tracking objects in the user's viewport and for determining a viewing orientation of the user of the rendering device. This information may be used by the rendering device to display virtual objects in a spatial and temporal relation with objects in the real-word scene. In another implementation the rendering device may be a pass-through rendering device which may include a tracking camera and sensors similar to the see-through rendering device. However, in such implementation, the rendering device does not comprise a (semi)transparent display. Instead, video data of the user's viewport captured by the tracking camera are blended with generated virtual objects based on the tracking and sensor information so that the video data represent a video representation of the real-word scene and the virtual objects. These video data are subsequently displayed as a viewport to the user.

Above-mentioned rendering devices may further include sensors for measuring the affect of the user using the rendering device. Content data provided to the rendering device may include parts (content parts) that can be adapted based on the measured affect. In this application, such content data will be referred to as affect-based adaptable content. Here, affect refers to the underlying experience of feeling, emotion or mood of a user of the rendering device. Measuring the affect of a user may include identifying the emotional state of mood of a person based on sensor data, e.g. face expression, heart beat rate, gaze, head motion, etc. This sensor information may be used to determine the mood of the user.

The mood of a user may be modelled in different ways. For example, in the categorical approach emotions may be modelled by a number of discrete emotion categories, for example the six basic emotions happiness, sadness, surprise, fear, anger and disgust. Hence, based on sensor information, a categorical model may determine that a person is for example happy or sad. In the so-called dimensional approach emotions may be labeled in a continuous space, for example in the two dimensional valence-arousal space or the three dimensional valence-arousal-control space. For example, in the 2D valence-arousal space affect may be modelled based on valence, referring to the perception of a negative and positive feeling/mood (as an emotion), and arousal, referring to the intensity of the feeling/mood (similar to quantity, or strength, of the emotion). Here, arousal may be objectively measurable as activation of the sympathetic nervous system.

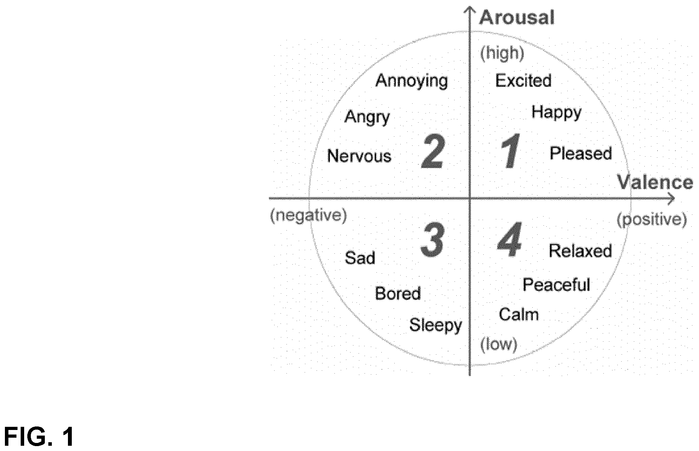

Based on these two measurable parameters, a diagram as depicted in **Fig. 1** can be constructed mapping emotional states of a person as a function of two measurable parameters, wherein one axis represents valence and another axis represents arousal. This way, the emotional state of a person may be classified. For example, valence may be measured based on face recognition (e.g. determine a user is laughing) and arousal may be determined based on hart beat rate and/or movements of the head. It is noted however that other measurable observables such as focus level can also be used and/or contribute to determine a current emotional state of a person. The model depicted in the figure based on arousal and valence is just one of the many different models that can be used to model the emotional state of a person based on measurable parameters. In the embodiments described in this application, any type of model (categorical or dimensional) or combination of models may be used to measure an emotional state, an affect, of a person based on sensor information.

To obtain relevant measurements, sensor information of one or more sensors, including visual sensors such as cameras, may be analyzed. The sensor information may include sensor information related the activity of the heart, for example in the form of electrocardiograms (ECGs) which can be measured by wearables such as fit-trackers, smartwatches or other suitable sensors. Sensor information related to brain activity such as electro-encephalograms (EEGs) which can be measured by EEG sensors. Sensor information related to gaze, eye movement and face expression generated by gaze detection algorithms and facial expression algorithms which are available in smartphones, smart TVs, AR Glasses etc. Sensor information related to movements and pose may be based on accelerometers or inertial measurements unit (IMU). Further sensor information may be generated based on speech analysis and manual input.

Although combining multiple sensor inputs may give a more accurate representation of the emotional state of a person, already a realistic estimate of the mood of a person can be achieved based on one sensor signal. For example, a gaze detection scheme may be used to determine positive/negative and soft/strong responses of a person watching video content. Additionally, EEG devices are now commonly used in medical applications. These sensors are small and accurate enough to be integrated in portable devices, like VR monitors or headsets.

While content selection based on an affect measured by sensors of a rendering device and video streaming based on affect analysis of historical viewer data are known in the prior art, these schemes are limited in the sense that they do not allow a content creator to create content that is suitable for actively steering the mood of a viewer. Additionally, these schemes do not provide a true immersive experience as is the main aim of extended reality video streaming.

The main insight of the embodiments resides in schemes that allow content adaptation based on a measured affect of the person viewing the content and a target affect associated with one or more parts of the content data. This way, the immersive experience of the viewer may be improved. Additionally, it may be used to steer the mood of a viewer. Depending on the content creators' intention, the affect-based video stream may either increase or decrease an emotion at a certain point in the content and/or steer the mood of the viewer to another emotional state (e.g. from sad to happy). In this application, adaptation of the content should be construed broadly and either may be implemented 1) at stream level by for example changing playout speed of a video stream or skipping parts, 2) at scene level by e.g., changing the arrangement of objects in a scene, or 3) at content level by changing characteristics of content like increasing the size of an object.

Hereunder, different types of adaptations of the content data based on a measured affect are described. Adaptation may be triggered using the measured affect and a related target affect parameter value. This target affect parameter value may be referred to as the target affect. The target affect, may be used as a threshold value or an end-point value. For example, if the measured affect reaches the target affect parameter value, then an adaptation process may be triggered. Alternatively, an adaptation process may be executed until the measured affect (approximately) matches the target affect.

An adaptation may be linked to a part of the content data of a content file or content stream using for example presentation time information, e.g. presentation time stamps, associated with the content that is streamed to a client apparatus. A content creator may determine which parts of the content may be adapted and which adaptation process may be used. For example, when a user is happy at a certain time instance, but the desired emotion as signaled by the target affect is to be scared, rendering device may be controlled to speed up the progression within the scene and/or change characteristics of the environment (make it brighter or darker) and/or a character within a scene. In a further embodiment, an adaptation process may include switching from local rendering of 3D objects (i.e. rendering and playout of the content data by the rendering device) to remote rendering of the 3D objects at a server system (e.g. a cloud system) so that pre-rendered content data is transmitted to the rendering device for playout by the rendering device. Remote rendering may be used for high fidelity rendering of objects that cannot be realized by local rendering on the rendering device.

Affect-based content adaptation may include changing (parts of) the content data to be played out by a rendering device or the processing of the content data based on a measured affect to invoke a certain target affect. For example, when a driver of a car is tired and not alert the size, contrast and/or brightness of a road sign can be changed to increase awareness of the driver. In XR applications different types of content can be processed, therefore data representing the content will be referred to in this application as content data. Examples of content data that may be adapted may include captured video data, provided in conventional 2D pictures or video frames and computer-generated data such as 3D objects, textures, depth information associated with a color pictures such as the depth information in RGB-depth (RGBD) pictures. These types of computer-generated data may be referred to hereunder as synthetic image data or in short synthetic data.

Here, 3D objects may define coordinate-based representations of any surface of an object in three dimensions. These representations can be expressed in polygons, vertices, etc. An object may be file-based or streamed. A 3D model for the most part consists out of sub-parts. Movement or animation of those sub parts can be realized by changing the positional attributes of these sub parts. The main object and its subparts may be identifiable using identifiers IDs that can be used to target the operation on the object. Adaptations to such 3D objects may include any type of adaptation in terms of color, shape, brightness, resolution, etc.

Further, textures may be regarded as visual data structures that be wrapped over objects in a picture. Adaptation to textures may include making the texture brighter or darker. Further, textures comprising (part of) a face may be changed so that movement of the mouth, emotions, and eyes can be simulated.

Additionally, RGB and depth RGBD picture include both visual 2D image data and associated depth information, for example a 3D point cloud or a mesh. Adaptation operations on a (2D) RGBD image may include translating the RGBD to a 3D point cloud or mesh and performing operations on the 2D image data. For example, luminating parts of the image can be done in the RGB space within the image. Operations that increase the size of an object may be realized in the 2D space by making changes in the gradient by for example making parts of it more white or gray. Further, brightness and/or color of pixels may be adapted based on the measured affect. Also, content adaptations may be based on known image recognition and image synthesizing techniques like NVIDIA Maxine. For example, such techniques may be used to change the gaze of a person in a video scene based on the measured affect.

Hence, adaptations of content data as described above may include adaptations in video data and/or in the synthetic image data, for example: change color of a model, replace parts of an object, enlarge (part of) an object, alter properties (e.g. smoothness, reflection), change resolution, number of polygons, lighting/contrast alterations, increase object brightness, change gaze, facial expression, or facial features of the object in case of it being a character, etc. Specific adaptations may be content and scenario specific and is up to the developer.

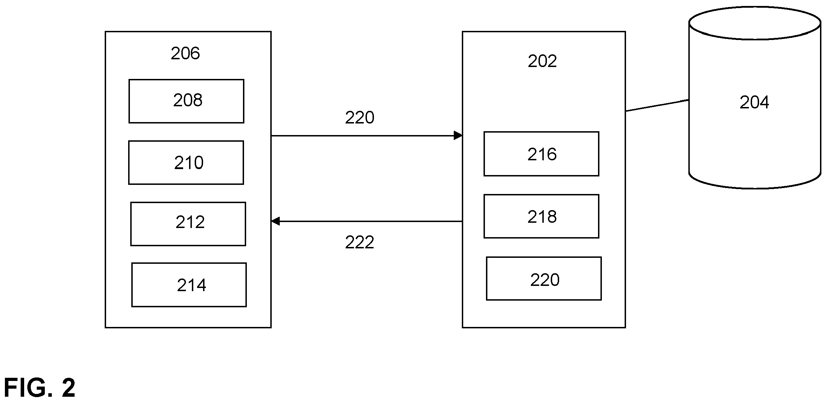

**Fig. 2** depicts a schematic of a rendering system according to an embodiment of the invention. In particular, the figure depicts a rendering system configured to adapt content based on the affect of the user of the system. The system **200** may include a server system **202** which may be connected to or being part of a content delivery network **204** CDN. The system may further include a rendering device **206,** which may include or be associated with a client device **208,** wherein the client device may be configured to set up a streaming session and/or another data delivery process with the server system. The client device may be configured to request content data from the server system and the server system may send one or more data streams **214** comprising the requested content data to the client device.

At least part of the content data, e.g. computer-generated 3D objects, may be processed and rendered locally (i.e. at the client side) by a rendering engine **210** of the rendering device. The result of the rendering process may be a bitmap or any other form of data, e.g. raster graphics, which may be written into a display buffer so that the rendered content can be displayed in the viewport of the rendering device. Alternatively and/or in addition (part of) the content data may be processed and rendered remotely by a rendering engine **216** server system and transmitted as pre-rendered content data to the rendering device. Suitable streaming protocols such as RTP, RTSP over UDP or an adaptive streaming protocol, such as MPEG DASH (Dynamic Adaptive Streaming over HTTP) may be used to transmit the content data, video data and synthetic image data, to the rendering device.

The rendering device may include or be associated with a plurality of sensors **210** for measuring sensor information associated with a user viewing content that is played out by the display device. The sensor information may include (but not limited to): user location, viewing direction, gaze, face expression, electro-encephalograms (EEGs), heartbeat, speech, movement and/or pose information.

To render objects in the viewport, the rendering device may obtain scene description data, e.g. a scene descriptor file, from the server system or a content server hosing the content data to be rendered. Based on the scene descriptor file, the client device may identify and download content data, e.g., from the server system or from the content server. In some embodiments, the client device may download all 3D content of the scene, while in other embodiments, the client device may download only part of all 3D content, e.g., only those 3D assets which are visible from a user's viewpoint in the scene, which may be rendered by the rendering engine of the rendering device. In a further embodiment, the client device may request pre-rendered objects from the rendering engine of the server system.

Depending on the implementation, the rendering device and/or the server system may include an affect module **212,218** configured to determine an affect metric based on at least part of the measured sensor information. In an embodiment, the affect module may be an algorithm configured to receive sensor information and to determine parameters, for example valence and arousal, that may represent a measured affect. Hence, the affect metric may be a value representing the measured affect of the user of the rendering device. Such measured affect metric may be referred to in this application in short as the measured affect. To realize adaptation based on the measured affect, the rendering device and/or the server system may include an adaptation module **214,218** that is configured to initiate adaptation of the content data or adaptation of the processing of the content data during rendering. In some embodiments, the affect module may be part of the adaptation module. Hence, the adaptation module may be configured to receive a measured affect or sensor signals to determine a measured affect and to trigger adaptations based on a measured affect.

Thus, the rendering system of **Fig. 2** allows different schemes for adapting content data or the rendering of content data based on a measured affect of the user of the rendering device.

In a first embodiment, the server system **206** may send adaptation information including a target affect and adaptation rules in one or more messages **220** to a rendering device **202** that is configured to adapt the content data or there rendering thereof on the basis of the adaptation information and a measured affect.

In a second embodiment, the server system may send adaptation information including a target affect and adaptation rules to a rendering device that is configured to adapt the request of the of the content data based on the adaptation information and the measured affect.

In a third embodiment, the rendering device may send a measured affect or sensor data for determining a measured affect in one or more messages **222** to the server system, which may be configured to adapt the content data based on adaptation information and the measured affect.

The rendering device or the server system may perform adaptations based on adaptation information which may identify parts of the content (content parts) that can be adapted based on a measured affect. Adaptation information may include different types of adaptation processes that are available for adapting content data, desired affects associated with parts of the content data, processes that are available for adapting content and rules for adapting the content based on the measured affect. This information may be stored at the client apparatus and/or the server system. A content provider may include adaptation information in the metadata associated with the content data that is stored with the server system and that is sent, e.g. streamed, to or downloaded by a rendering device. In an embodiment, the adaptation information may be signaled to the client apparatus using any known signaling scheme including insertion in the content data stream, transmission via a WebSocket, a REST API, etc.

The adaptation information may be structured according to a data structure including data fields that may be associated with a specific meaning or function. The data structure may be described in plain text, CSV, Excel, XML, etc. An example of such a data structure is provided in table 1 below:

**Table 1**

| **Field** | **Type** | **Mandat ory** | **Comment** | |
|---|---|---|---|---|
| ID | Integer | Yes | Can be the ID of a segment (in case of stream_adaptation) or (part of) the 3D content | |
| StartPTS | Integer | Yes | | |
| EndPTS | Integer | Yes | | |
| DesiredAffect | Enumeration | Yes | Values: | |
| | | | | - Happy |
| | | | | - Sad |
| | | | | - Angry |
| | | | | - Disgusted |
| | | | | - Afraid |
| Type | Enumeration | Yes | Values: | |
| | | | | - Stream_Adaptation |
| | | | | - Scene_Adaptation |
| | | | | - Content_Adaptation |
| Adaptation | Array [Enumeration] | No | If the Type=Stream_Adaptation this field can have the following values: | |
| | | | | - SpeedUp |
| | | | | - SlowDown |
| | | | | - Skip |
| | | | | - Loop |
| Value | Array [Integer] | No | When Stream_Adaptation is set this value is mandatory. It can contain the following values: | |
| | | | | - Playout Speed: Integer of playout speed where 1.0 is regular playout speed, 0.5 is half and 2.0 is two times. This value indicates the max range of the playout speed to |
| | | | | differ with regards to the default playout speed. |
| | | | | - Skip: Either 0 for not skipping and 1 for skipping |
| | | | | - Loop: Either 0 for not looping or 1 for looping. |
| Adaptation_URI | Text | No | URI to a script (e.g., JavaScript) that can perform an operation within the content to perform the required adaptation. Mandatory when Scene_Adaptation or Content_Adaptation. | |

The data structure may be referred to as an adaptation marker. Based on the adaptation information in the adaptation marker the rendering device may start adaptation of the content according to an adaptation process. As shown in table 1, an adaptation marker may be associated with an identifier, which, in an embodiment, may match or may be linked to a content part, such as a segment, chunk or any other content data container that is used for transmitting content data to the rendering device. Further, the data structure may include information for identifying parts of content data (a content part) in the content file or content stream. For example, in an embodiment, a content part may be identified by presentation timestamps PTS that define the presentation timeline of content data that is rendered.

In an embodiment, adaptation information may include information about one or more desired affects also referred to as target affects. In an embodiment, a target affect for a content part may be determined by the content author (for example happy, sad, angry, disgusted, afraid). Alternatively, a target affect may be determined by an algorithm, e.g. a machine learning or deep learning algorithm, that is configured or trained to determine an affect based on image analysis of a part of the content data. As described earlier, an affect may be represented as a predetermined value within a certain range of values that is associated with an affect metric that can be determined based on measured sensor signals.

The adaptation information may further include information about the different types of adaptation processes that may can be used (stream adaptation, scene adaptation, content adaptation) and information associated with such adaptation types.

For example, in an embodiment, if the adaptation information indicates that adaptation of the playout of rendered content data is possible, the adaptation information may include an indication how the adaptation of the playout may be achieved, e.g. speed up, slow down, skip or loop (repeat) a certain part of the content data. Additionally, in an embodiment, if the adaptation information indicates that adaptation of the playout of rendered content data is possible, the adaptation information may comprise parameter values and/or flags associated with certain adaptations, e.g. parameters or parameter ranges associated with playout speed, a flag for indicating a skip action or for a repetition.

The adaptation information may further indicate if scene adaptation or content adaptation is possible. In an embodiment, a scene or content adaptation (including volumetric video and or textures of 3D objects) may be realized by executing a script. Such script may identify which parts of the content need to be altered, reads the desired affect, and defines how the adaptation is executed. In an embodiment, a scene adaptation may include changing one or more parts of a scene descriptor. An adaptation may be realized using JavaScript, a shader or any other executable. Adaptations may include copying (volumetric) objects (e.g., converting one bird into a flock of birds) to changing characteristics of characters in the scene by the following non-limiting adaptations:
- change lighting properties
- change placement (position, rotation, size) of object within the scene
- define movement of object within a scene (e.g., when in a car, the car moves through the 3D environment and it might be needed to simulate the movement of a road sign)
- making the teeth bigger
- increasing or slowing down movement of an object
- changing the gaze of a person or character
- replace or modify unappealing 3D models with more appealing 3D models to match user's preferences (e.g. cats with dogs)
The decision on how the content data may be adapted may be controlled by the content creator based on an authoring scheme. The script may be referenced in a resource locator, for example a resource locator in the adaptation marker, so that it can be downloaded by the client apparatus.

Thus, content data may be authored by a content provider to include adaptation information, for example in the form of one or more adaptation markers, in the content data or to associate adaptation information with the content data to signal parts of the content that can be adapted. A client device of a rendering device as described with reference to **Fig. 2** may be configured to request content data from the server, wherein the content data may include different types of data, video data and/or synthetic image data, as described earlier. To that end, the client device may send a request to the server. Further, the client device may send sensor information about the orientation of the user of the rendering device so that the server system can select content data for a particular viewport of the user. Additionally, in some embodiments, client device may send information about a measured affect of the user of the rendering device. Alternatively, the client device may send sensor information to the server system which can be used to determine a measured affect.

To effectively change the emotional state of a user based on a measured affect, a target affect at different time instances of the content timeline may be needed. Further, information about what adaptation processes may be used for adapting the content data at each of these time instances may be needed. This information may be laid down in one or more adaptation rules, wherein an adaptation rule may link a target affect parameter value (a target affect) with one or more adaptation processes. Hence, the adaptation information that is sent to the rendering device may include one or more adaptation rules linking one or more target affects with one or more adaptation processes. An adaptation module in the rendering device or in the server system may be configured to control the adaptation of the content data or the rendering of the content data based on the adaptation information and a measured affect.

In some embodiments, adaptation information comprising one or more adaptation rules may be sent to the rendering device in one or more messages or embedded as metadata in the content data. This way, the rendering device comprising an adaptation module can execute a local adaptation process based on a measured affect. In an embodiment, at least part of the adaptation information may be sent to the rendering device as part of other metadata, e.g. in case of an adaptive streaming system, a manifest file such as a media presentation description (MPD) file that defines resource locators of segments or chunks that can be used by the client apparatus to request content data from a server.

In other embodiments, adaptation information comprising target affects and one or more adaptation rules may be stored with the server system so that a server system comprising an adaptation module can execute a remote adaptation process based on a measured affect received from a client apparatus.

These adaptation rules may be needed in specific use cases so that an adaptation module can use these rules to dynamically adapt the content data or the rendering of the processing data. For example, a driver may be provided with additional instructions or information at predetermined moments (e.g., in fearful situations) or in the case of a haunted house to scare a user even more. In another use case, parts of the content that bore the user may be skipped or played out in a higher playout speed. In such cases, the measured affect of the user may be used as a guide for the consumption of content. Adaptation rules may be defined for the processing of different types of affect-adaptable content data, in particular content data that is streamed during a live streaming session or content data that is streamed during on demand session.

In an embodiment, adaptation rules may be configured for use with pre-recorded and/or on-demand content. In that case, different parts of the content data may be defined and associated with a target affect. Table 2 depicts an example of adaptation rules for streaming pre-recorded / on-demand content data that may be adapted based on the affect of a user. Here, the context is a use case of a person moving through a haunted house:

**Table 2**

| PTS | Desired Emotional State | Adaptation | |
|---|---|---|---|
| 0-10 | Calm | | - Slow down content |
| | | | - Repeat content |
| 10-20 | Fearful | | - Increase size of ghost |
| | | | - Increase of speed the ghost is coming towards you |
| 20 - 30 | Disgusted | | - Zoom in on content |

As shown in table 2, the adaptation rules may include information that identifies different parts of the content data that are identified as adaptable based on affect using, for example, presentation time information defining a part of the presentation timeline of the content data. Further, each identified part may be associated with a target affect (e.g. a desired emotional state such as calm, fearful, disgusted), and one or more adaptations that may be selected to achieve the target affect. This way, a rendering device may measure (at a certain position in the presentation timeline of the content data) a certain affect and compare the measured affect value with a target affect parameter value (a desired target affect) for the particular content part defined in the adaptation rules. Based on this comparison, the rendering device, in particular the adaptation module in the rendering device, may select an adaptation process of the content part as defined in the adaptation rules and execute the selected adaptation process.

In an embodiment, adaptation rules may be adapted for live streaming. In that case, the adaptation rules may define multiple current affects associated with a desired target affect. Table 3 depicts a non-limiting example of a data structure of an adaptation rule message for live streaming of content data. In this example, content data may be adapted based on the affect of a user. Here, the context is a use case of a person driving a car while wearing AR glasses:

**Table 3**

| Desired Emotional State | Current Emotional State | Adaptation | |
|---|---|---|---|
| Calm | Fear | | - Display arrows of where to drive |
| | | | - Adapt speed signs to indicate lower speed |
| Calm | Confusion | | - Increase sign size/font |
| | | | - Repeat sign |
| Calm | Boredom | | - Show route map & give extra information about the road ahead |

As shown in table 3, the adaptation rules may define a plurality of current affects (fear, confusion, boredom) associated with a desired target affect (calm). This way, during live streaming the client apparatus may measure a current affect and use a current affect in the adaptation rules that matches the measured affect and use the associated adaptation in the adaptation rules for adapting the content data.

In some embodiments, adaptation of the content may be executed by an adaptation module in the rendering device. In other embodiments, adaptation of the content may be executed an adaptation module on the server system. In that case, current affects as determined based on measured sensor information may be transmitted to the server using an affect message. An example of a data structure of such affect message is depicted in Table 4.

**Table 4**

| **Field** | **Type** | **Mandatory** | **Comment** | |
|---|---|---|---|---|
| PTS | Integer | Yes | | |

| MarkerlD | Integer | Yes | ID of the marker defined in Table . | |
|---|---|---|---|---|
| EmotionalState | Enumeration | Yes | Contains current emotional state. | |
| | | | Values | |
| | | | | - Happy |
| | | | | - Sad |
| | | | | - Angry |
| | | | | - Disgusted |
| | | | | - Afraid |

As shown in table 4, an affect message may include information about the presentation time of the content data for which an affect metric, a target affect parameter value, is determined. The information regarding adaptation rules can be described in plain text, CSV, Excel, XML, and signaled via WebSocket, REST API, etc. The above-described adaptation markers and adaptation rules may be applied to the content in different ways, for example, on a per-scene basis (e.g. when the user is driving in that area and he is nervous change the color palette in sign A and sign B to calm down) or a per-asset basis (e.g. Sign A and Sign B have a "calmness" property assigned to the color that can be used to calm the user).

The information associated with affect-based adaptation of content data, such as the above-described target affects, adaptation rules and affect messages may be used by the client apparatus to process the content data and to execute adaptation of the content. The embodiments above are one-limiting examples of adaptation information that is used for adapting content data or the processing thereof based on a measured affect. For example, in further embodiments, a target affect parameter (a target affect) in the adaptation information may be used as a threshold value that can be used in a comparison with a measured affect value. Based on such comparison, an adaption process may be triggered. Additional conditions regarding the comparison and the type of adaptation processes that may be available may be laid down in one or more adaptation rules as explained with reference to the examples above.

In a further embodiment, adaptation information may include information regarding the type of affect model used for the target affect and the measured affect. This information may be used to determine if a server and/or a rendering device support affect-based adaptation of content rendering as described with reference to the embodiments in this disclosure.

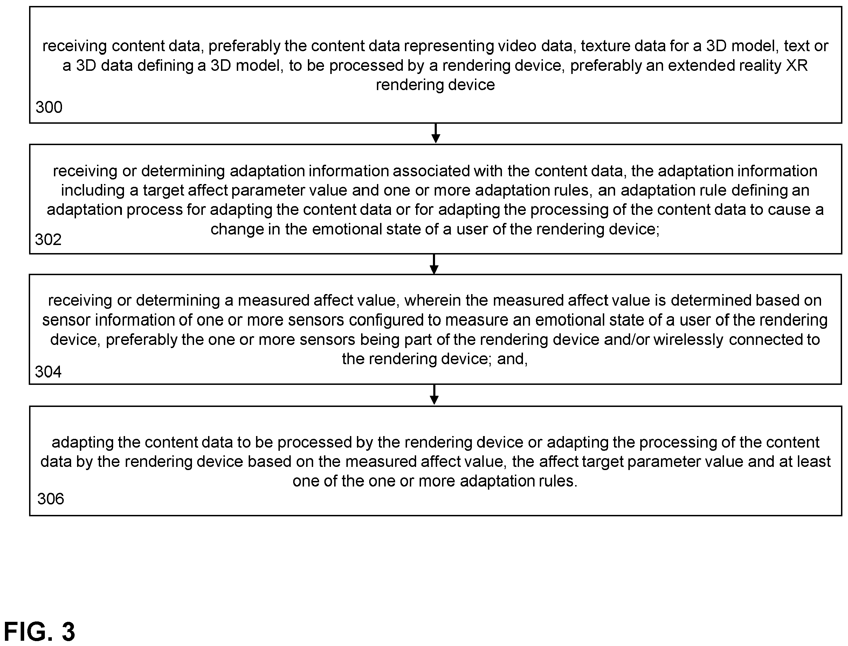

**Fig. 3** depicts a method of processing affect-adaptable content data according to embodiment of the invention. In particular, the figure illustrates a flow diagram describing a method of processing content data which may start with a step **302** of receiving content data, preferably the content data representing video data, texture data for a 3D model, text or a 3D data defining a 3D model, to be processed by a rendering device. In an embodiment, the rendering device may be an extended reality XR rendering device, such as a Head Mounted Display HMD, augmented reality AR glasses, an augmented reality head-up display.

Such rendering device may include a rendering engine for processing 3D objects such that it can be displayed by a display of the rendering device, e.g. the viewport of an HMD. In some embodiments such as cloud based rendering, the rendering engine for rendering 3D objects is located at the server system. This way, the server system is configured to render content data, e.g. 3D objects, and prepare the content data for transmission to the rendering device. The content data may include different assets, including video data, texture data for a 3D model, text, and/or 3D data defining a 3D model as described above. The server system may receive, retrieve, cache, or pre-fetch the content data from a separate content server and/or the content data may be accessed directly at the server system, e.g. when content data is stored, cached or pre-fetched into the server system.

Further, the method may include a step of receiving or determining adaptation information associated with the content data (step **304**), wherein the adaptation information may include a target affect parameter value and one or more adaptation rules.

Here, the target affect parameter value associated with a part of the content data may be provided by a content provider authoring the content. Alternatively, a target affect associated with a content part may be computed using for example an algorithm, e.g. an image processing algorithm, that is configured to analyze a scene and to compute a certain desired emotional state based on features of objects in a scene.

Further, an adaptation rule may define an adaptation process for adapting the content data or for adapting the processing of the content data to cause a change in the emotional state of a user of the rendering device. An adaptation rule may be part of adaptation information which allows the data processing device identification and selection of an adaptation process that can be used for adapting the content data to cause a change in the emotional state of the user. In an embodiment, the adaptation process may be configured to change an emotional state of the user that is viewing the content data towards a desired emotional state as defined by the target affect.

As described with reference to **Fig. 1****,** an affect of a person may be represented by one or more parameter values of a model representing the emotional state of a person. In an embodiment, a target affect parameter value in the adaptation information may represent a value indicating an emotional state that the author of the content data desires or that the author wants to use as a threshold value and that can be compared with a value indicating a measured affect. As described above, in an embodiment, a part of the content data (a content part) may be associated with one target affect parameter. In another embodiment, a content part may be associated with multiple target affect parameters.

Adaptation information may also include identification information for identifying a content part that can be adapted and that is associated with at least one target affect. For example, presentation time information, e.g. in the form of presentation timestamps, of data, e.g. video frames, of a content part. The presentation time information may represent a presentation timeline of the content data. Alternatively and/or in addition, the identification information may include a content identifier for identifying the content part, e.g. a segment or chunk identifier, which may be in the form of an resource locator, e.g. an URL or the like.

The method may further include receiving or determining a measured affect value, wherein the measured affect value is determined based on sensor information of one or more sensors configured to measure an emotional state of a user of the rendering device. In an embodiment, the one or more sensors may be part of the rendering device and/or wirelessly connected to the rendering device (step **306**). Based on the measured affect and the adaptation information, content data to be processed by the rendering device or processing of the content data by the rendering device may be adapted (step **308**) based on the measured affect value, the target affect parameter value and an adaptation process as defined by an adaptation rule.

For example, in an embodiment, the adaptation of the content data may include comparing the measured affect parameter value with the target affect parameter value and if the comparison indicates that the measured affect deviates from the target affect, an adaptation process may be selected and executed in order to attempt to change the emotional state of the user in a direction towards the target affect parameter value. To introduce further possibilities of conditional selection of an adaptation process based on the measured affect, the adaptation information may include current affect parameter values. Multiple current affect parameters may be associated with a target affect parameter and an adaptation rule may relate one of the current affect parameters to one or more adaptation processes. This way, a measured affect may be compared with a current affect parameter value and based on that comparison an adaptation process may be selected.

As described above, in an embodiment, the adaptation process may be identified by a resource locator, preferably, uniform resource locator that can be used for downloading a script, preferably an adaptation script, that can be executed by the client apparatus to adapt the content data.

The method illustrated by the flow diagram of **Fig. 3** provides a flexible and efficient way for enabling affect-based content adaptation during rendering of content data by a rendering device. In an embodiment, the content data may be transmitted in a stream to a streaming client of the rendering device. Content data for such rendering device, that may include video data and/or synthetic image data, can be linked with adaptation information that identifies (at least) a target affect parameter value and an adaptation process for adapting the content (e.g. changing colors, changing or adding a 3D model, etc.) or for adapting the processing of the content data (e.g. increase or decrease playout speed, skip playout of certain content data, etc.). A measured affect value can be used to determine if adaptation is needed nor not. The method allows a measured affect value of the user to be used as a guide for the consumption of content and is particularly useful for increasing the immersive experience of XR rendering applications.

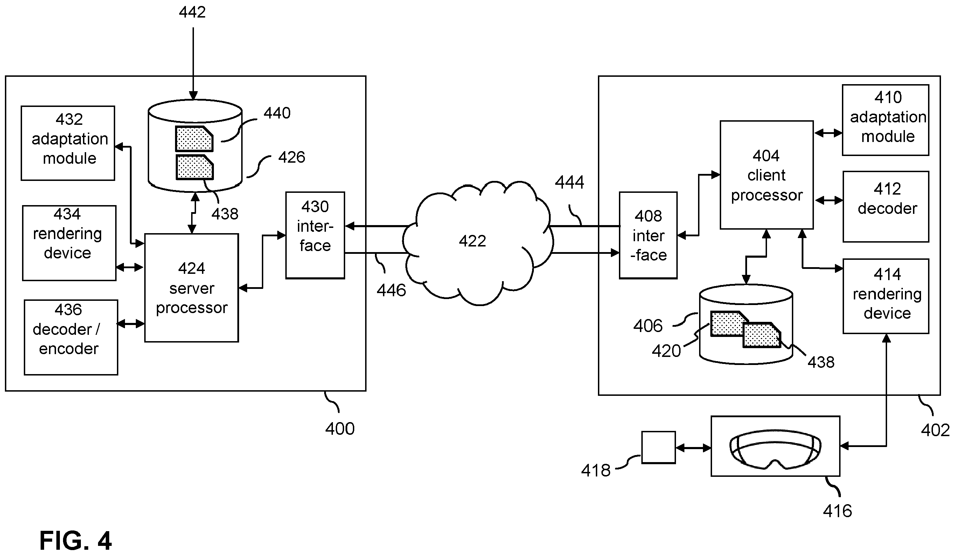

**Fig. 4** depicts a schematic of an extended reality XR rendering system configured to render content data which can be adapted based on a measured affect. In particular, the figure depicts a schematic of rendering system including a server system **400** and rendering device **402** configured to process affect-adaptable content data. The rendering device may include a client processor **404** connected to data storage **406,** e.g. a buffer, and a network interface **408** for establishing communication with the server system. The rendering device may further include a decoder **412** for decoding content data received via the network interface from the server system and a rendering engine **414** for preparing the decoded content data for playout by an XR display device **416.**

The XR display device may include or be associated with one or more sensors **418** which are configured to measure sensor information about the user using the XR display device, wherein the information may include: user location, viewing direction, gaze, face expression, electro-encephalograms (EEGs), heartbeat, speech, movement and/or pose information. In an embodiment, at least part of the one or more sensor may be part of the XR display device and/or rendering device. In another embodiment, part of the sensors may be wirelessly connected to the XR display device and/or rendering device. The client apparatus may use at least part of the measured sensor information, e.g. a viewing direction, to request content from the server system that matches the viewport of the user. In some embodiments, content adaptation based on the measured affect may take place at the rendering device. In that case, the rendering device may include an adaptation module **410** which may be configured to receive at least part of the measured sensor information and to determine on the basis of that sensor information a measured affect value of the user viewing the XR display device. During rendering the rendering device may receive affect-adaptable content data **420** and adaptation information **421** may be stored in the buffer of the rendering device. Depending on the implementation, the buffer may include further information (not shown) that may be needed for the rendering process, including e.g. a manifest file identifying segments that can be requested from the server, and scene descriptors defining 3D objects for different scenes.

Server system **400** may include a server processor **424,** a network interface **430** for establishing communication with the rendering device and a storage medium **426** for storing assets that can be played out by the XR display device. The server system may be further configured to receive assets **442** from other server systems or a content authoring system and store these assets on the storage medium. The assets stored on the storage medium may include affect-adaptable content data **438,** including for example video data and synthetic image data, such as point cloud, textures and 3D models, and adaptation information **440** associated with the content data. In a further embodiment, a scene descriptor file may be stored at the storage medium, which describes the 3D objects that belong to a certain scene. The server system may be configured to receive a request for content data from the client apparatus via a network **422** connecting the rendering device to the server system. In some embodiments, the server system may be configured to render and adapt content data based on measured affect values which are sent by the rendering device to the server system. In that case, the server system may include a rendering device **434** and a decoder / encoder system **436** and an affect adaptation module **432.**

Adaptation based on the measured affect may be performed by the rendering device. In that case, the client processor may send a request **444** for content data to the server system, wherein the requested content data may include affect-adaptable content data for playout by the XR display device and associated adaptation information. The request sent to the server system may include information, e.g. content identifiers, viewing direction, etc., that can be used by the server system to select the requested content data. The server system may send the requested content data in one or more content streams **446** to the rendering device, which will process the data in the one or more content streams so that is can be displayed by the XR display device. Here, the processing by the client processor may include decoding the content data, which may include video data and synthetic data such as a mesh, a texture or a 3D model, and providing decoded content data to the rendering device which will prepare the decoded data for playout by the XR display device. Here, the rendering process prepares the decoded data for the XR display device, which may for example include embedding or combining the video data with the synthetic data and formatting the processed data in a format so that it can be displayed by the XR display device. Then, based on the measured affect, the adaptation module of the rendering device may trigger the processor to execute an adaptation process of the content data that are rendered on the XR display device. This adaptation process may be executed according to the process as described with reference to **Fig. 3** and all other embodiments described in this application.

Alternatively and/or in addition, in further embodiments, the rendering and/or affect-based content adaptation may be performed by the server system. In that case, the server system may process the content data, that includes video data and/or synthetic image data, and transmit the content data to the rendering device, that will process content data so that is can be displayed by the XR display device. Here, the processing by the server system may include decoding the content data by decoder **436,** which may include video data and synthetic image data and providing the decoded content data to the rendering device **434,** which prepares the decoded data for playout by the XR display device. Here, the rendering process prepares the decoded data for the XR display device, which may for example include embedding or combining the video data with the synthetic data and formatting the resulting data so that it can be processed by the XR display device. Server-based rendering is especially advantageous where the XR display device is a wireless XR display such as AR glasses that has limited battery and processing capabilities.

In such cases, the rendering device may be configured to send sensor information for determining a measured affect or a measured affect to the server system. The measured affect and the adaptation information associated with the content data that is being rendered may then be used by the adaptation module to trigger, during the rendering of the content data, the execution of an adaptation process as specified by one or more adaptation rules in the adaptation information. The adaptation process may include a decoder decoding encoded content data that is stored on the storage medium of the server system, so that 2D or 3D models and/or textures may be added to the content or pixels values (e.g. color and/or brightness) may be changed. The adapted content data may be rendered by the rendering device of the server system, encoded and subsequently transmitted to the client apparatus, which may process the adapted content data so that it can be played out by the XR display device.

In an embodiment, the network interface of the server system may be a wired communication interface, such as an Ethernet or fiber-optic based interface. The network may for example be the Internet or a mobile network, wherein the streaming server may be connected to a fixed part of the mobile network. Alternatively, in another embodiment, the network interface may be a wireless communication interface, which may also be referred to as a radio interface, and which may be configured to connect to a mobile network infrastructure. In some examples, the network interface may comprise a radio interface, for example an 4G or 5G radio interface for connecting to a 4G or 5G mobile network adhering to one or more 3GPP standards, or a Wi-Fi communication for connecting to a Wi-Fi network infrastructure or any other wireless interface.

In an embodiment, the rendering device may be implemented as an XR rendering device, which is configured to execute the processing steps (or a subset thereof) as described with reference to **Fig. 3****.** In an embodiment, the adaptation process may include retrieving an XR scene descriptor file for a scene to be rendered by the XR rendering device. Such scene descriptors are known from ISO/IEC DIS 23090-14 Part 14: Scene Description for MPEG Media. Based on the XR scene descriptor file, the client processor may identify and download 3D assets, e.g., from the server system. In some examples, the client processor may download 3D assets of associated with a scene, while in other examples, the client may download only part of all 3D assets, e.g., only those 3D assets which are visible from a user's viewpoint in the scene.

In various embodiments, the XR rendering may be implemented as, associated with or part of a pair of tethered or untethered AR glasses, a HMD or an AR heads-up display, which may be configured to render spatially aligned 3D and 2D assets over an external environment, e.g., over the viewer's physical surroundings. In an embodiment, the server system may act as rendering server for the XR rendering device and may include a storage medium comprising content data of the scene to be rendered, including descriptor files, 3D/2D assets representing 3D/2D graphics objects, etc. Further, the server system may have the ability to render part of a scene, e.g., as an omnidirectional frame, encode/transcode, package, and distribute the rendered scene part and any other generated assets.

During operation, the XR client processor may retrieve one or more descriptor files that contain information on the scene and the available and/or required assets. The assets themselves may be stored at/by the server system or another server, e.g. a content or media server, connected to the server system. In an embodiment, the server system or the content server may be part of a content delivery network CDN. The descriptor files may include, or represent, the scene descriptor data as described elsewhere. Based on the scene descriptor data, the XR client apparatus may download those assets which are needed to render the scene. In some embodiments, the XR client may download all assets so as to be able to render the scene offline, e.g., even if network connectivity is interrupted. After parsing the descriptor(s), e.g., as contained in the scene descriptor data, the XR client may select which of the required assets are to be rendered, for example on the basis of criteria such as visibility.

Streaming technologies that may be used for streaming content data, including the affect-adapted content data, to the client apparatus may include HTTP adaptive streaming (HAS) schemes, for example MPEG-DASH and HTTP Live Streaming (HLS), that specify adaptive bitrate video streaming schemes based on video data and associated metadata. The content data may be organized and structured based on a certain data format which may be defined by a HAS streaming standard or MPEG-CMAF which describes encoding and packaging schemes for segmented objects. CMAF is an ISO standard developed by MPEG harmonizing codec profiles and segment formats for HAS schemes such as MPEG-DASH and HLS. In some embodiments, the data format of the content data may include playback periods including one or more adaptation sets, an adaptation set including media representations of different resolution and/or quality and a representation including a sequence of media segments, wherein a media segment includes a compressed video data of a predetermined quality.

The metadata associated with the video data may be organized in a manifest file or a manifest file update patch, which includes metadata to transform a manifest file a client apparatus is currently using, into a manifest file for the next playback period. During the video creation process manifest files may be generated and stored together with the video data on a media storage device. A manifest file may be referred to in MPEG DASH as a Media Presentation Description (MPD) and may be structured in accordance with a certain machine-readable document format, e.g. XML, JSON or the like. A manifest file may comprise information about media assets, e.g. media streams including video and audio streams, that are available to the client apparatus and information how a client apparatus can retrieve these media assets. A manifest file may include segment identifiers, e.g. in the form of URLs, so that a client apparatus is able to request video segments from a server. Different ways for signaling the segment identifiers may be used e.g. URL templating, explicit URLs, etc.

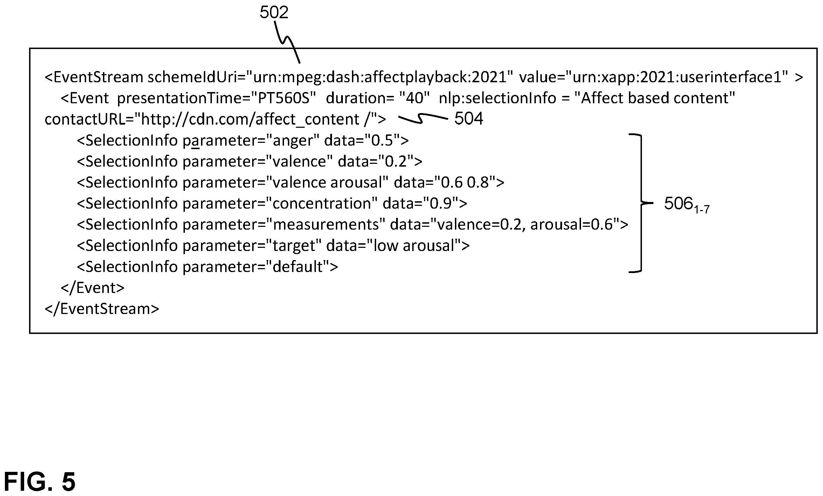

In an embodiment, a manifest file or a manifest file update may be used for signalling adaptation information as described with reference to the embodiments. For example, a manifest file may be used for identifying content parts that can be adapted and for signalling adaptation information, e.g. affect parameters and/or adaptation rules, associated with identified content parts. **Fig. 5** illustrates an example of part of a manifest file for signaling affect-adaptable content data according to an embodiment of the invention. In particular, the figure illustrates an example of part of a media presentation description MPD **500** which includes metadata signalling the client device that adaptation of content based on a measured affect is supported. The MPD in the figure illustrates a server-driven approach, wherein a so-called Event element is used to show the available options to the client device, for which, as a response, the server updates (by sending an MPD update) the MPD with a new Period element containing the appropriate content to be played back next, without the client knowing what is the content. Here, the options (in this example) indicate the different ways to measure affect. e.g. the same MPD can be used from a client that measures "anger" affect as "anger = 0.5" and another client that measures "anger" as "valence = 0.4 arousal = 0.8".

As shown in the figure, the MPD may include a profile identifier **502** associated with an MPEG DASH profile "urn:mpeg:dash:affectplayback:2021" signaling the client device that the MPD supports adaptation of content rendering based on a measured affect is supported. Further, the MPD may include a target URL **504,** e.g. cdn.com/affect content, for signalling a server that can be contacted by the client device. The content may be identified as part of an "event" element, which may be associated with parameters **506₁₋₇.** An affect parameter associated with an emotional state (anger, concentration, arousal, valence) may be signalled as desired affect values, threshold affect values, current affect values, etc. The signalling may be based on numerical or textual descriptors of emotion, or any combination thereof. The information is contained in an "Event" element and the timing for the affect-based content is on the Event parameters (selection time, relevant duration, selection information, target URL etc.).

Table 5 below illustrates an further embodiment of part of a manifest file for signalling affect-adaptable content. This embodiment illustrates a client-driven approach, wherein each content part, e.g. a segment or a chunk, may be represented in a AdaptationSet.

**Table 5**

| |
|---|
| <MPD> |
| ... |
| <Period duration="PT0H0M50.000S"> |
| <!-- Each AdaptationSet contains different content --> |
| <AdaptationSet segmentAlignment="true" bitstreamSwitching="true" maxWidth="640" maxHeight="320" maxFrameRate="90000/2163" par="2:1" lang="und"> |
| <!- In this case case the target valence and arousal values are 0.5 and 0.5 --> |
| <EssentialProperty schemeldUri="urn:mpeg:dash:affect:2021" value="0.5, 0.5"/> |
| <Representation id="1 "> |
| ... |
| </Representation> |
| <Representation id="2"> |
| ... |
| </Representation> |
| </AdaptationSet> |
| <AdaptationSet segmentAlignment="true" bitstreamSwitching="true" maxWidth="640" maxHeight="320" maxFrameRate="90000/2163" par="2:1" lang="und"> |
| <!- In this case case the target valence and arousal values are 0.2 and 0.6 --> |
| <EssentialProperty schemeldUri="urn:mpeg:dash:affect:2021" value="0.2, 0.6"/> |
| <Representation id="1 "> |
| ... |
| </Representation> |
| <Representation id="2"> |
| ... |
| </Representation> |
| </AdaptationSet> |
| <AdaptationSet> |
| ... |
| </AdaptationSet> |
| </Period> |
| ... |
| </MPD> |

Also in this embodiment, the MPD may include a profile identifier associated with an MPEG DASH profile "schemeIdUri="urn:mpeg:dash:affect:2021" signaling the client device that adaptation of the rendering based on a measured affect is supported. In this embodiment, the target affect is signalled as Essential Property of the AdaptationSet comprising affect parameters, such as valence values and arousal values associated with a target affect. In another embodiment, it may be signalled as aSupplementalProperty. All other aforementioned ways to express the affect (e.g. by emotion, by composite values, by affect thresholds etc.) may be used.

Additional information that is relevant to the overall selection mechanism (i.e. applied to all included AdaptationSets) can also be signalled to Period level by a respective Period-level Essential Property (e.g. the overall desired emotion, the available values, the scale etc.). In other variants it may be signalled as a SupplementalProperty, or some other element attribute. The timing for the affect-based adaptation is inherited by the timing of the AdaptationSet. This approach may be used for a client-driven approach, since the client application selects desired content, e.g. an AdaptationPeriod, based on the MPD.

Information additional to the information in the above-described MPDs may be signalled to a higher level (e.g. as MPD descriptors), or lower level (e.g. in the bitstream of the media segments), or both.

The client apparatus may be initialized by fetching metadata like a media presentation description MPD, one or more scene descriptors etc. and setting up the client device and the rendering engine with the adaptation rules. Then during playback, the client apparatus will download assets and/or frames or segments according to the current PTS of the content presentation timeline, the measured affect, a target affect and an adaptation rule.

The video streaming connection between server system and client apparatus may be based on the RTP protocol or based on RTSP over UDP for the lowest amount of delay. A connection may be established both on video stream level and on WebSocket level to be able to transmit client information, e.g. metadata needed for the streaming. Alternatively, an adaptive streaming protocol such as DASH may be used.

In an embodiment, the server may be a so-called edge server, i.e. a server which is located at the edge of a network. An edge server may for example be co-located with a base station of a wireless telecommunication network. This way, the edge server is physically located relatively close to client apparatuses that are connected to the base station. This way a fast, low-delay data connection may be established between the edge server and a client apparatus. For example, the connection between the edge server and the client apparatus may e.g. be based on the 5G standard having a latency lower than the motion-to-high-quality latency that is required to enable an immersive experience by the user of the video processing device. For example, a Mobile Edge Computing or Multi-access Edge Computing (MEC) unit may be used wherein storage, networking resources and data processing, such as the video processing described with reference to the embodiments in this disclosure, may be integrated or associated with a base station, e.g. an eNodeB, that is part of a radio access network (RAN). This way, computer intensive and latency sensitive applications like multi-view video and augmented reality applications may be hosted at the edge of the network. The connection between the edge-server and the client apparatus thus provides a fast data communication channel.

It is noted that the data communication between the streaming client and the streaming server may involve multiple networks. For example, the streaming client may be connected via a radio access network to a mobile network's infrastructure and via the mobile network's infrastructure to the Internet, with the streaming server being a server which is also connected to the Internet.

The server processor may be configured, e.g., by hardware design or software, to perform the operations described in this application in as far as pertaining to a streaming server or in general to the streaming of video data of multi-view video of a scene to a client apparatus. In general, the processor may be embodied by a single Central Processing Units (CPU), such as a x86 or ARM-based CPU, but also by a combination or system of such CPUs and/or other types of processing units. The server may be distributed over different entities, e.g., over different servers. In that case, the processor may also be distributed, e.g., over the CPUs of such different servers. The server system may comprise one or more data storage devices, such as a hard drive or an array of hard drives, a solid-state drive or an array of solid-state drives, etc., which may be used to store data. In an embodiment, the server may be a content delivery node, or may be implemented in a distributed manner using a number of content delivery nodes. In an embodiment, the content delivery nodes may be part of a content delivery network (CDN). The streaming server may also be implemented by another type of server or a system of such servers. For example, the streaming server may be implemented by one or more cloud servers or by one or more edge nodes of a mobile network.

Similar to the server network interface, the client network interface may be a wired or a wireless network interface. For example, a radio network interface such as a 4G or 5G radio interface for connecting to a 4G or 5G mobile network adhering to one or more 3GPP standards, or a Wi-Fi communication interface for connecting to a Wi-Fi network infrastructure, etc. The data communication between the client and the server may involve multiple networks. For example, the streaming client may be connected via a radio access network to a mobile network's infrastructure and via the mobile network's infrastructure to the Internet, with the streaming server being a server which is also connected to the Internet. The client apparatus may further comprise a processor configured, e.g., by hardware design or software, to perform the operations described in this specification in as far as pertaining to a client apparatus or in general to the receiving, by streaming, of video data of multi-view videos of a scene. In general, the processor may be embodied by a single Central Processing Unit (CPU), such as a x86 or ARM-based CPU, but also by a combination or system of such CPUs and/or other types of processing units, such as Graphics Processing Units (GPUs).

Generally, the client apparatus may be embodied by a (single) device or an apparatus capable of processing video data, e.g., a smartphone, personal computer, laptop, tablet device, gaming console, set-top box, television, monitor, projector, smart watch, smart glasses, media player, media recorder, etc. In some examples, the client apparatus may be a so-called User Equipment (UE) of a mobile telecommunication network, such as a 5G or next-gen mobile network. In other examples, the client apparatus may be an edge node of a network, such as an edge node of the aforementioned mobile telecommunication.

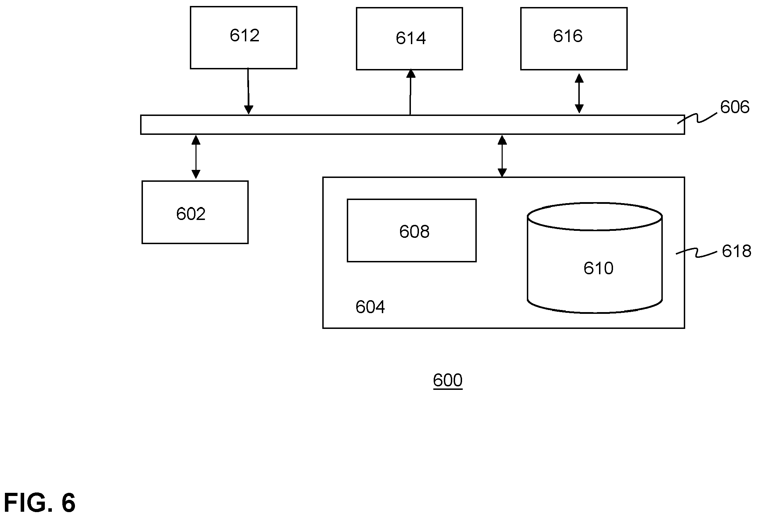

**Fig. 6** is a block diagram illustrating an exemplary data processing system that may be used in as described in this disclosure. Data processing system **600** may include at least one processor **602** coupled to memory elements **604** through a system bus **606.** As such, the data processing system may store program code within memory elements **604.** Further, processor **602** may execute the program code accessed from memory elements **604** via system bus **606.** In one aspect, data processing system may be implemented as a computer that is suitable for storing and/or executing program code. It should be appreciated, however, that data processing system **600** may be implemented in the form of any system including a processor and memory that is capable of performing the functions described within this specification.

Memory elements **604** may include one or more physical memory devices such as, for example, local memory **608** and one or more bulk storage devices **610.** Local memory may refer to random access memory or other non-persistent memory device(s) generally used during actual execution of the program code. A bulk storage device may be implemented as a hard drive or other persistent data storage device. The processing system **600** may also include one or more cache memories (not shown) that provide temporary storage of at least some program code in order to reduce the number of times program code must be retrieved from bulk storage device **610** during execution.

Input/output (I/O) devices depicted as input device **612** and output device **614** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **616** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system **600.**

As pictured in **Fig. 6****,** memory elements **604** may store an application **618.** It should be appreciated that data processing system **600** may further execute an operating system (not shown) that can facilitate execution of the application. Application, being implemented in the form of executable program code, can be executed by data processing system **600,** e.g., by processor **602.** Responsive to executing application, data processing system may be configured to perform one or more operations to be described herein in further detail.

In one aspect, for example, data processing system **600** may represent a client data processing system. In that case, application **618** may represent a client application that, when executed, configures data processing system **600** to perform the various functions described herein with reference to a "client". Examples of a client can include, but are not limited to, a personal computer, a portable computer, a mobile phone, or the like.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. Method of processing content data comprising:
receiving content data, preferably the content data representing video data, texture data for a 3D model, text or a 3D data defining a 3D model, to be processed by a rendering device, preferably an extended reality XR rendering device;
receiving or determining adaptation information associated with the content data, the adaptation information including a target affect parameter value and one or more adaptation rules, an adaptation rule defining an adaptation process for adapting the content data or for adapting the processing of the content data to cause a change in the emotional state of a user of the rendering device;
receiving or determining a measured affect value, wherein the measured affect value is determined based on sensor information of one or more sensors configured to measure an emotional state of a user of the rendering device, preferably the one or more sensors being part of the rendering device and/or wirelessly connected to the rendering device; and,
adapting the content data to be processed by the rendering device or adapting the processing of the content data by the rendering device based on the measured affect value, the affect target parameter value and at least one of the one or more adaptation rules.

2. Method according to claim 1 wherein the adaptation information includes a plurality of target affect parameter values, each target affect parameter value being associated with at least one adaptation rule and being associated with one or more content parts in the content data that can be adapted.

3. Method according to claim 2, wherein the adaptation information includes identification information for identifying the one or more content parts in the content data that can be adapted, preferably the identification information including one or more presentation timestamps and/or one or more video segment identifiers.

4. Method according to claims 2 or 3 wherein adapting the content data or adapting the processing of content data includes:
determining a target affect parameter value and an adaptation rule associated with the content part on the basis of the adaptation information; and,
comparing the measured affect value with the determined target affect parameter value and based on the comparison, adapting the data of the content part or adapting the processing of the data of the content part based on the determined adaptation rule.

5. Method according to claim 1 wherein the adaptation information includes a plurality of current affect parameter values associated with at least one of the one or more target affect parameter values, each current affect parameter value of the plurality of current affect parameter values being associated with at least one adaptation rule of the plurality of adaptation rules.

6. Method according to claim 5 wherein adapting the content data or adapting the processing of content data includes:
comparing the measured affect parameter value with the plurality of current affect parameter values;
determining an adaptation rule based on the comparison; and,
adapting the content data or the processing of the content data based on an adaptation process defined by the determined adaptation rule.

7. Method according to any of claims 1-6 wherein at least part of the one or more affect adaptation rules define an adaptation process for adapting the content data, the adaptation process being configured to add, remove, replace or adjust at least part of the content data.

8. Method according to any of claims 1-6 wherein at least part of the one or more affect adaptation rules define an adaptation process for adapting the processing of the content data, the adaptation process being configured to increase, decrease or skip at least part of the processing of the content data.

9. Method according to any of claims 1-8 wherein the measured affect is based on: a user position, one or more electrocardiograms ECGs, one or more electroencephalograms EEGs signals, gaze and/or face detection, facial expression analysis, speech analysis, movement analysis, pose analysis.

10. Method according to any of claims 1-9 wherein adapting the content data includes:
receiving an executable script or a program; and,
executing the executable script or program to adapt the content data.

11. Method according to any of claims 1-10, wherein the method further comprises:
measuring ambient information defining an ambient context for the user of the rendering device; and,
the adapting of the content data or the processing of the content data being further based on the ambient information.

12. Method according to any of claims 1-11 wherein the rendering apparatus is configured to process the content data for an display device, preferably the XR display device including at least one of: a Head Mounted Display HMD, augmented reality AR glasses, an augmented reality head-up display or a holographic display.

13. Method according to any of claims 1-12
wherein the content data is received based on a streaming technique, preferably an adaptive streaming technique, more preferably an HTTP adaptive streaming technique; and/or,
wherein at least part of the processing of the content data is performed by a client apparatus, preferably an adaptive streaming client apparatus, such as a MPEG DASH client apparatus, the method further including:
requesting content data based on a manifest file, preferably a media presentation description MPD, the manifest file defining a plurality of resource locators, wherein each resource locator is associated with a segment or chunk of content data, the manifest file further comprising at least part of the adaptation information, preferably the manifest file including an

14. A rendering device, comprising:
a computer readable storage medium having computer readable program code embodied therewith, and a processor, preferably a microprocessor, coupled to the computer readable storage medium, wherein responsive to executing the computer readable program code, the processor is configured to perform executable operations comprising:
receiving content data, preferably the content data representing video data, texture data for a 3D model, text or a 3D data defining a 3D model, to be processed by the rendering device, such as an extended reality XR rendering device;
receiving or determining adaptation information associated with the content data, the adaptation information including a target affect parameter value and one or more adaptation rules, an adaptation rule defining an adaptation process for adapting the content data or for adapting the processing of the content data to cause a change in the emotional state of a user of the rendering device;
receiving or determining a measured affect value, preferably a measured affect value, wherein the measured affect value is determined based on sensor information of one or more sensors configured to measure an emotional state of a user of the rendering device, preferably the one or more sensors being part of the rendering device and/or wirelessly connected to the rendering device; and,
adapting the content data to be processed by the rendering device or adapting the processing of the content data by the rendering device based on the measured affect value, the affect target parameter value and at least one of the one or more adaptation rules.

15. A server system comprising:
a computer readable storage medium having computer readable program code embodied therewith, and a processor, preferably a microprocessor, coupled to the computer readable storage medium, wherein responsive to executing the computer readable program code, the processor is configured to perform executable operations comprising:
receiving or accessing content data, preferably the content data representing video data, texture data for a 3D model, text or a 3D data defining a 3D model, to be processed by a rendering device, such as an extended reality XR rendering device;
receiving or determining adaptation information associated with the content data, the adaptation information including a target affect parameter value and one or more adaptation rules, an adaptation rule defining an adaptation process for adapting the content data or for adapting the processing of the content data to cause a change in the emotional state of a user of the rendering device;
receiving or determining a measured affect value, preferably a measured affect value, wherein the measured affect value is determined based on sensor information of one or more sensors configured to measure an emotional state of a user of the rendering device, preferably the one or more sensors being part of the rendering device and/or wirelessly connected to the rendering device; and,
adapting the content data to be processed by the rendering device or adapting the processing of the content data by the rendering device based on the measured affect value, the affect target parameter value and at least one of the one or more adaptation rules.

16. The rendering device according to claim 16, further configured to executable operations according to any of the method steps defined by claims 2-13.

17. The server system according to claim 16, further configured to executable operations according to any of the method steps defined by claims 2-11 or 13.

18. Computer program product comprising software code portions configured for, when run in the memory of a computer, executing the method steps according to any of 1-13.
